# EUROPEAN PATENT SPECIFICATION

(11) **EP 1 988 387 B1**
(45) Date of publication and mention of the grant of the patent: **19.08.2015**
(21) Application number: 08155411.5
(22) Date of filing: 29.04.2008
(51) Int. Cl.: G01N 21/90, G06T 7/00

(54) **Machine for inspecting glass containers**
Maschine zur Überprüfung von Glasbehältern
Machine pour inspecter des récipients en verre

(30) Priority: 02.05.2007 US 799656
(43) Date of publication of application: 05.11.2008
(73) Proprietor: Emhart Glass S.A., 6330 Cham (CH); Applied Vision Corporation, Akron, OH 44223 (US)
(72) Inventor: Sones, Richard A., Cleveland Heights, Ohio 44118 (US); Diehr, Richard D., Horseheads, New York 14845 (US); Novini, Amir R., Akron, Ohio 44333 (US)
(74) Representative: Johnstone, Douglas Ian

(56) References cited:
- EP-A2- 0 264 087
- WO-A1-00/20858
- DE-A1- 19 537 341
- US-A- 5 200 801
- US-A- 5 214 713

## Description

The present invention relates to machines, which inspect glass containers for defects, and more particularly, to a system which inspects for checks (cracks) in translucent glass containers.

In the glass container industry, small cracks, or fractures in the glass are referred to as "check defects" or "checks". Checks can range from sub millimeters to several hundred millimeters and can be oriented at any direction from vertical to horizontal. Glass is not a crystalline structure by nature, but most cracks propagate roughly along a plane of some orientation in space mostly determined by the shape of the glass at that location. Most of these crack defects will drastically weaken the container, often causing it to rupture or to leak. Therefore, it is very likely that a container manufacturer will remove a container with a check before it reaches filling plants. Checks appearing near the mouth of the containers are called finish checks. In the glass bottle industry, the term "container finish" refers to the portion of the bottle that defines the mouth, threads or beads, and the ring. The upper surface of the mouth is referred to as the sealing surface.

Another anomaly, which can also be present are bubbles. A bubble results when gas is trapped in the glass. When the bubbles are large they are referred to as a blister and when the bubbles are small, they are referred to as a seed. The presence of bubbles, while affecting the appearance of the bottle, does not necessarily require the rejection of the bottle and an operator may allow such a bottle to be packed. For purposes of this application, the word blister will include a seed.

U.S. Patents Numbers 4,701,612, 4,945,228, 4,958,223, 5,020,908, 5,200,801, 5,214,713, 5,895,911, 6,104,482, 6,211,952, and 6,275,287, and EP 0,264,087 A2, all relate to devices that detect defects in the finish of a container.

According to the present invention there is provided a machine for inspecting the finish area of a glass container for anomalies comprising defects, generally of the type disclosed in US 5,200,801 and as defined in the preamble of claim 1.

The apparatus disclosed in EP 0,264,087 A2 is intended to detect defects on the threaded mouth of a bottle. Each captured image of the mouth is firstly unwrapped, resulting in the threads being represented as inclined parallel lines. The control then compares and calculates the brightness of at least two points spaced by a constant distance along the parallel lines to detect defects, and the start or end of the thread, if present in that image. The control compares the number of signals corresponding to the defect detected points for the frame containing that image with a set value to judge whether that frame is defective or not. This is repeated for the images captured at the other angular increments of rotation. The control then compares the number of defective frames with a set value, and compares the total number of defect detected signals for all the frames with a set value to take into account those of the defect signals corresponding to the start and end of the thread, and makes a final judgment as to whether the bottle is defective.

The apparatus structure disclosed in US 5,214,713A is somewhat similar to that of the later EP-A2. The US-A is directed to a data storage method suitable for time efficient processing. Multiple line scanned images are taken of bottle as it rotates and are placed in data storage areas that are in close proximity and sequential, such that the digital representation of the image of the first visible portion of the bottle is placed near the data representing the second visible portion of the bottle and the data representing the third visible portion of the bottle. Because processing of these images often requires computer access to these images one after another, all of the stored data for all of these images is transferred to the computer at once when one of them is requested, so that the computer does not need to keep going back to the memory area and retrieving these subsequent images.

It is an object of the present invention to provide an apparatus for inspecting the finish area of glass containers to evaluate whether the image of an anomaly is indicative of a blister anomaly or of a check anomaly or an additional anomaly.

According to the present invention, there is provided a machine for inspecting the finish area of a glass container as defined in claim 1.

The present invention will now be described with reference to the accompanying drawings, some of which illustrate a presently preferred embodiment incorporating the principles of the invention, and in which:
Figure 1 is an oblique elevational schematic view of an inspection station of a machine for inspecting glass containers for anomalies, namely checks and other defects, as disclosed in co-pending EP-A-1,916,514 (EP Application No. 07118628.2);
Figure 2 is a schematic top view of the container at the inspection station of Figure 1 showing the light axes of a pair of light sources and the camera;
Figure 3 is a schematic elevational view showing the light axes of the light sources and camera shown in Figure 2;
Figure 4 is a drawing illustrating the structure of a control embodying the invention, showing how an unwrapped image is defined;
Figure 5 is a view, taken from the camera, of the finish area of the container shown in Figure 1, illustrating images captured each θ (theta) degrees of rotation of the container about its vertical axis through an angle Φ (phi);
Figure 6 is a schematic illustration of the unwrapping process illustrated in Figure 4;
Figure 7 is a presentation of 10 images of an anomaly captured through 11 locations spaced θ (theta) degrees apart through an angle of Φ (phi) degrees with the center of the object plotted;
Figure 8 is a presentation similar to that of Figure 7 showing only the objects (images of the anomaly) in Band 1-2;
Figure 9 is a presentation similar to that of Figure 7 showing only the objects in Band 2-3;
Figure 10 is a presentation similar to that of Figure 7 showing only the objects in Band 3-4;
Figure 11 is a drawing showing the structure of a control for determining whether a captured object is a check or a blister; and
Figure 12 is a drawing illustrating the structure of a control for identifying a container for rejection.

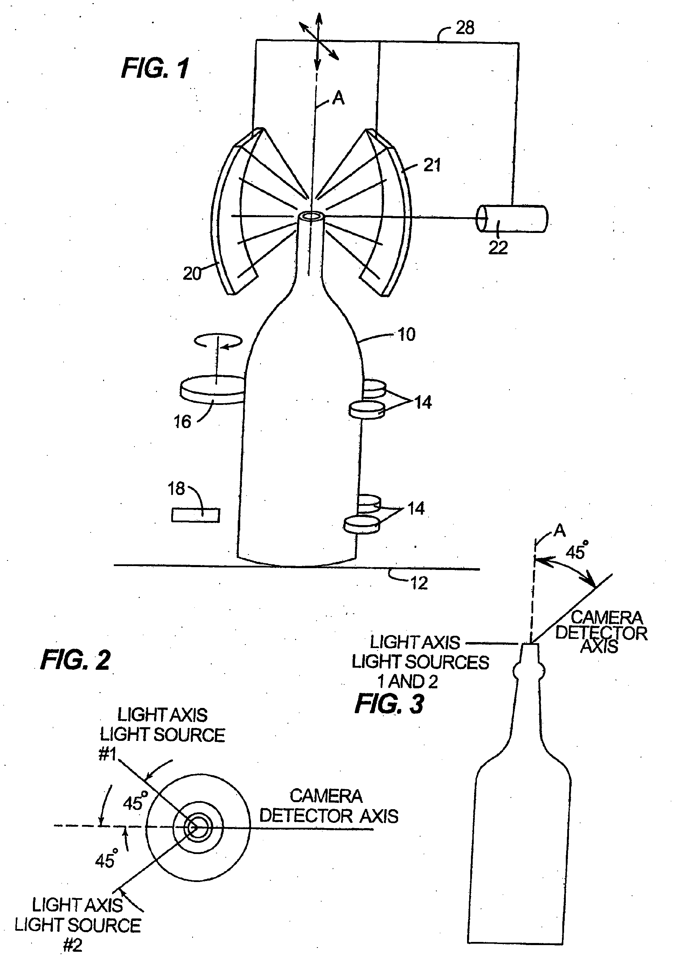

In a machine for inspecting glass containers (e.g. bottles), the containers 10 are transported vertically along a conveyor 12 to an inspection station illustrated in Figure 1. The conveyor may be a linear belt or a turret type feed system. A container 10 is engaged by upper and lower rear pairs of idler rollers 14 and a front drive wheel 16 so that rotation of the drive wheel in the clockwise direction will rotate the container in the counterclockwise direction. There is conveyor dwell of sufficient duration at the inspection station so that the container can be rotated more than 360 degrees while inspection takes place. A container presence sensor 18 will sense the presence of a container at the inspection station. Conical or arcuate light sources (a first light source 20 and a second light source 21) which can be configured from L.E.D.s, for example arranged in rows and columns as described in the above mentioned EP Application No. 07118628.2, illuminate the finish portion of the container and a camera 22 images the finish portion. The camera 22 may be a CCD, CMOS or like camera having a matrix array (X-Y array) of elements (pixels) to receive an image of the finish portion during the camera's exposure period.

As can be seen from Figures 2 and 3, the light axis for each light source is horizontal, and intersects the axis "A" of the container. Each light axis also lies in a vertical plane (not shown) of the container which intersects the axis "A" of the container, and is in front of the container. The two light axes are orthogonal to each other (the light axes are horizontal and 90 degrees related), and 45 degrees to a vertical plane including the camera 22 detector axis. The detector axis for the camera 22, which is located behind the container 10, is approximately 45 degrees from horizontal (the camera bisects the horizontal light axes). The ideal geometry that this configuration attempts to achieve is that of arcuate, conical or part-conical illumination (the light cone being horizontal with its apex, apical region or top of its frustum at the finish) where the camera 22 will not see any light directly from the light sources 20 and 21. With this relationship, the camera 22 is looking at a dark field and is ideally seeing only light coming from checks and blisters. The light sources 20 and 21 and camera 22 are supported by structure 28 that can be vertically displaced and horizontally displaced to reposition the system for different height/diameter containers.

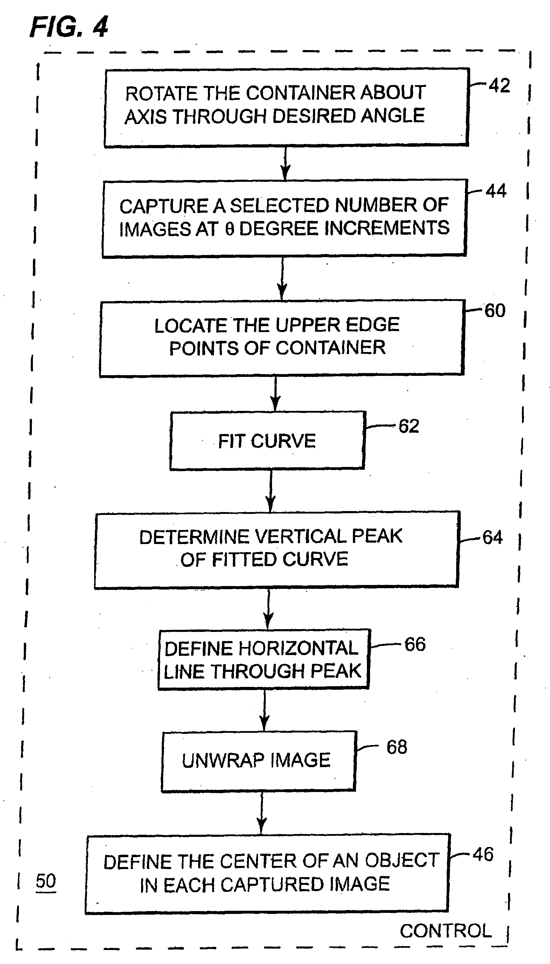

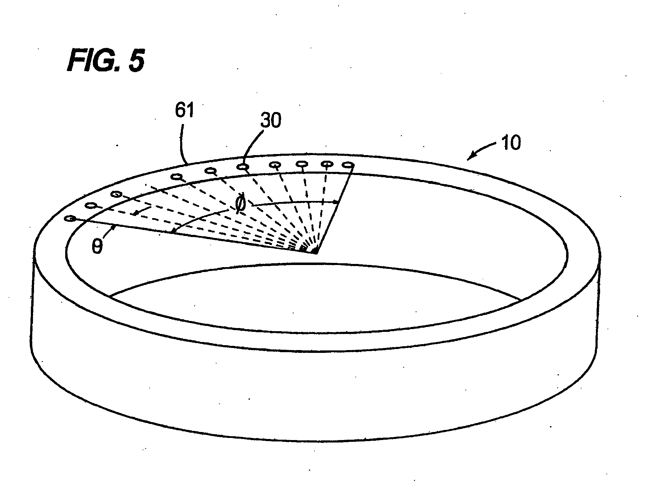

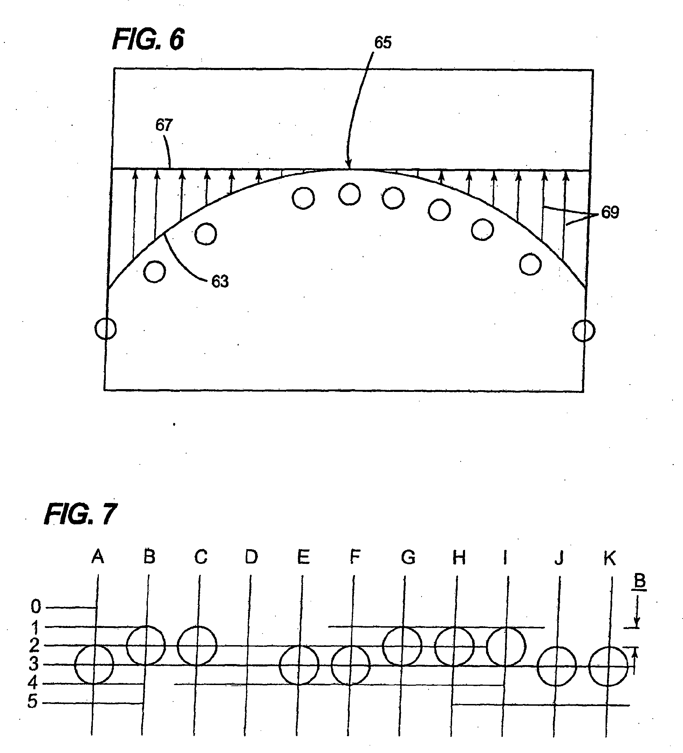

The machine embodying the invention incorporates or is associated with a control 50 (Figure 4) such as a processor. To start an inspection, the machine will transfer a container 10 to the inspection station and following a time sufficient for the rotation of the container 10 to become stable, the control 50 will begin the inspection. The Control will Rotate The Container About Axis Through Desired Angle 42 (Figure 4). Figure 5 illustrates the appearance of an anomaly 30 (a check or a blister) on or in the finish of the container 10, as it would appear if captured by the camera 22 as the container 10 is rotated through θ (theta) degree increments. The anomaly 30 is represented schematically by circles in Figures 5 to 10, although the actual images captured by the camera 22 preferably will depend upon the particular characteristics and/or location of the anomaly 30, for example will depend upon its outline and/or dimensions and/or area. As illustrated, the container 10 has an anomaly 30 which is captured, i.e. reflects light from the light sources 20 and 21 towards the camera 22, in turn, at ten of the eleven locations spaced θ (theta) degrees. Such could occur by operating the camera 22 every time the container 10 rotates θ (theta) degrees to advance the anomaly 30 to the next location, or alternatively could occur by holding the camera 22 open for a prolonged period while strobing the light sources 20 and 21 at each rotation of θ (theta) degrees. The images of, or containing, the anomaly 30 are shown located within an angle of interest Φ (phi) degrees, and defining a partial elliptical path since the camera axis is inclined to the axis of the container 10. The control 50 proceeds to Capture A Selected Number Of Images At θ (theta) Degree Increments 44 triggered by the first anomaly image sensed following entry of the anomaly 30 into the angle of interest, and the control 50 will then Locate The Upper Edge Points Of Container 60. This edge 61 is shown in Figure 5. The control 50 will then Fit Curve 62 to these edge points. This could be done using linear regression techniques. The fit curve 63 is shown in Figure 6. The control 50 then proceeds to Determine Vertical Peak Of Fitted Curve 64. This peak 65 is also shown in Figure 6. The control 50 then proceeds to Define Horizontal Line Through Peak 66 (line 67 in Figure 6) and proceeds to Unwrap Image 68. This procedure is shown in Figure 6 with vertical offsets 69 which are defined by the number of pixels required to shift the fitted curve 63, at each vertical row, vertically to the peak tangent line 67. The control 50 will then Define The Center Of An Anomaly In Each Captured Image 46.

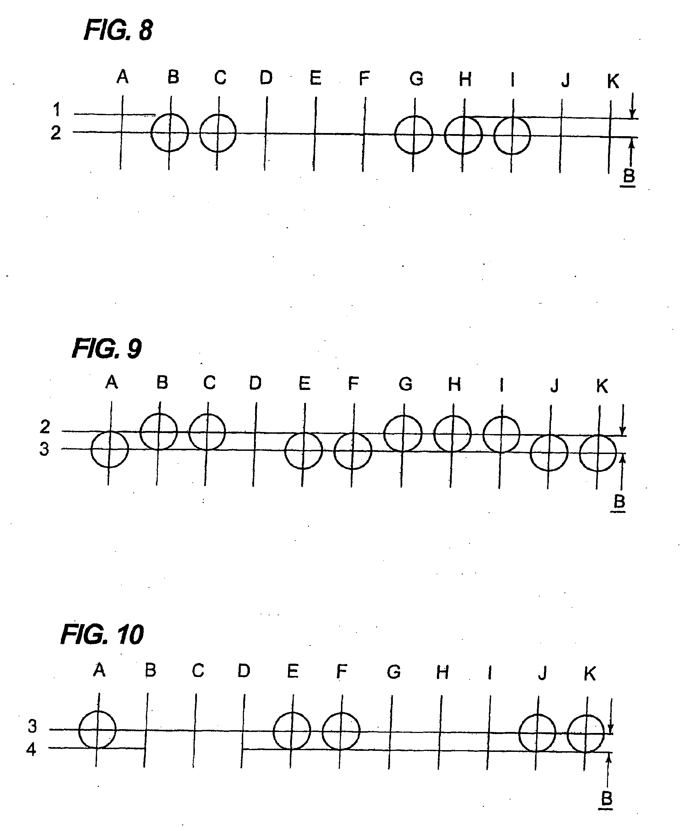

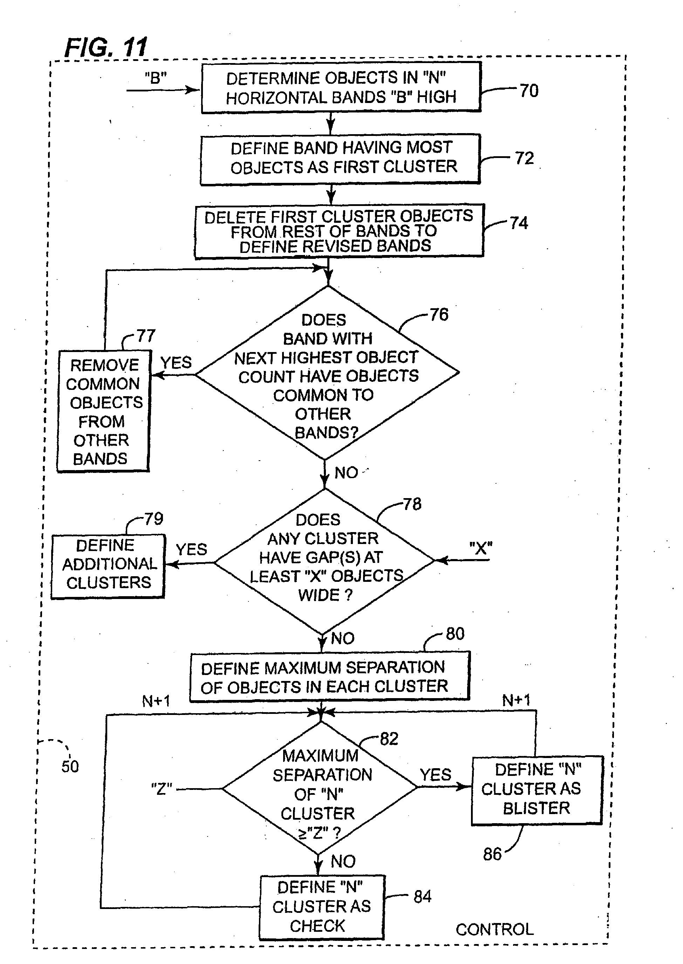

Figure 7 is a schematic presentation of the linear array of the ten images of an anomaly 30 captured as it is successively displaced through the 11 locations spaced θ (theta) degrees apart through the angle Φ (phi) degrees to allow the images of the anomaly 30 to be evaluated relative to a straight datum. The centers of the objects, i.e. captured images of the anomaly 30 are plotted showing their "Y" location as a function of three horizontal bands and with their "X" location corresponding to its angular increment. Differences in "Y" location can arise since the objects (i.e. the images of an anomaly 30 at the various angular locations), can appear to the camera 22 to be at different vertical and/or horizontal positions in or on the finish. These differences are usually relatively small in the case of a blister (bubble or seed). However, they may be relatively large in the case of a check (crack or facture) depending upon its direction of propagation, as viewed by the camera 22, or if caused by additional anomalies 30 which may be present in the angle of interest. While the preferred embodiment unwraps the elliptical image to define horizontal bands, the bands could be elliptically matched to the pattern of the captured objects. Figures 8-10 are schematic presentations of the objects sorted into each of the bands (1-2, 2-3, and 3-4) presented in Figure 7. Each band represents a horizontal scan line or lines (a band could, for example be five horizontal scan lines). The width of each band ("B") is shown as settable. Referring to Figure 11, the control 50 will Determine Objects In "N" Horizontal Bands "B" High 70. The objects within a band define a "cluster". The cluster objects identified in Figures 8 through 10 are:
Band 1 (1-2) - objects B, C, G, H, I;
Band 2 (2-3) - objects A, B, C, E, F, G, H, I, J, K;
Band 3 (3-4) - objects A, E, F, J, K;

The control 50 then proceeds to Define Band Having Most Objects As First Cluster 72. In the above illustration, Band 2 has the most objects (10). If two bands have an identical number, the control 50 could pick either one first. The control 50 then proceeds to Remove Common Objects From Other Bands 74. The bands thus become:
Band 2 (2-3) - objects A, B, C, E, F, G, H, I, J, K;

When the control 50 asks the query Does Band With Next Highest Count Of Objects Have Objects Common To Other Bands? 76, the answer will be in the negative - Band 2 has all the unique objects. No further revisions of the bands will take place. The objects in Band 2 will then be identified as a cluster.

Alternately, the bandwidth "B" could be set at 10 scan lines and all of the ten objects could be located within the single band and treated as a single cluster.

If a single band contains all of the unique objects, this is indicative of the capture of a single anomaly 30 comprising a blister. If one or more of the other bands contains unique objects, this is indicative of the presence of a check, and/or one or more additional anomalies 30 in the angle of interest since it is unlikely that any additional anomalies 30 would appear to the camera 22 to be in the same orbit or path as the first anomaly 30.

The control 50 next asks Does Any Cluster Have Gap(s) at least "X" Objects Wide (X is settable) 78. In the event the query is answered in the affirmative, the control 50 will Define Additional Clusters 79. If "X" was set at three, this query for Band 2, would be answered in the negative since there is a single gap at D one object wide. Had this gap been three objects wide (D,E,&F missing, for example) the control 50 would define the objects to the left of the gap (A,B,&C) as one cluster and the objects to the right of the gap (G-K) as a second cluster. It has been found that blisters generally have very small gaps and that a large gap indicates one or more checks (because of their differing reflection characteristics, more images of a blister than of a check will be captured during rotation of a bottle through the angle of interest). If the operator does not want to use this tool, "X" can be set at 12, for example.

The control 50 will then Define Maximum Separation Of Objects In Each Cluster 80. Cluster 1 has ten spacings separating A from K. The control 50 now determines whether the cluster is a check or a blister. This is done by answering the query "Max Separation of objects in "N" Cluster ≥ (greater than or equal to) "Z"?" 82. Assuming Z is 8 (a settable input), when this inquiry is answered for Cluster 1 the answer will be yes and the control 50 will Define "N" Cluster As Blister 86. Had the separation been less than 8, the control 50 would Define "N" Cluster As Check 84. This procedure will be repeated for each cluster.

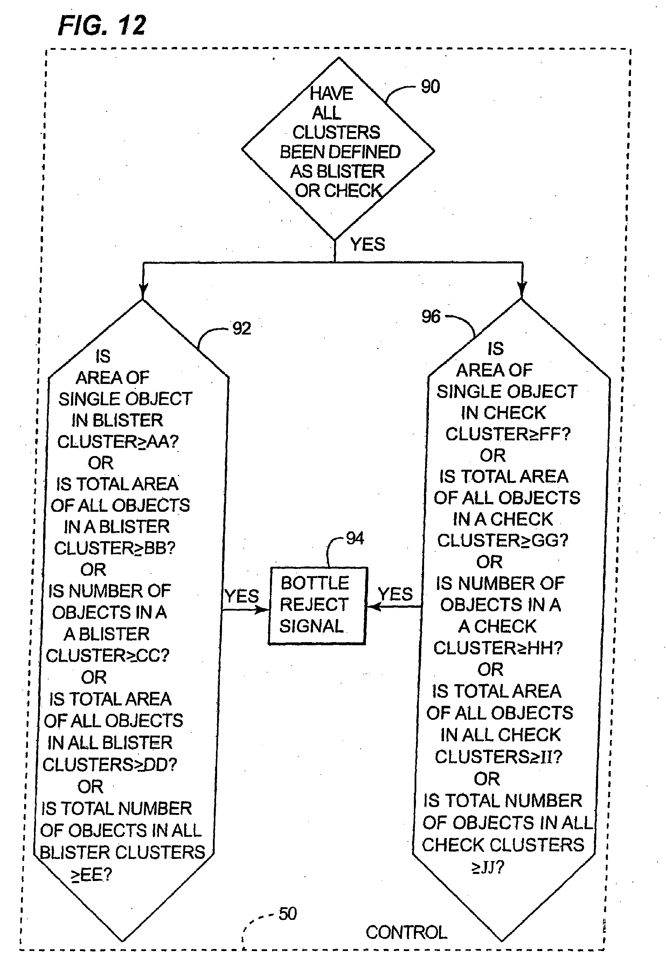

If desired, a decision could be made at this point to pass all blisters and reject all checks but additional choices are provided by the control 50. Figure 12 illustrates the structure of the control 50 for discriminating between a Blister or Check that will not result in a container 10 being rejected and one that will. The control 50 answers the query "Have All Clusters Been Defined As A Blister Or A Check? 90". If the answer is "yes", the control 50 answers the query "Is Area Of Single Object In A Blister Cluster ≥ (greater than or equal to) AA?" Or Is Total Area Of All Objects In A Blister Cluster ≥ (greater than or equal to) BB? Or Is Number Of Objects In A Blister Cluster ≥ (greater than or equal to) CC? or Is Total Area Of All Objects In All Blister Clusters ≥ (greater than or equal to) DD? Or Is Total Number Of Objects In All Blister Clusters ≥ (greater than or equal to) EE? 92. If this query is answered in the affirmative, the control 50 will issue a Bottle Reject Signal 94.

The control 50 will also answer the query "Is Area Of Single Object In Check Cluster ≥ (greater than or equal to) FF?" Or Is Total Area Of All Objects In A Check Cluster ≥ (greater than or equal to) GG? Or Is Number Of Objects In A Check Cluster ≥(greater than or equal to) HH? or Is Total Area Of All Objects In All Check Clusters ≥ (greater than or equal to) II? Or Is Total Number Of Objects In All Check Clusters ≥ (greater than or equal to) JJ? 96. If this query is answered in the affirmative, the control 50 will also issue a Bottle Reject Signal 94.

Various modifications may be made without departing from the scope of the invention as defined in the appended claims. For example, the light sources 20 and 21 may be configured as arcuate or part-conical panels as shown in Figure 1. Alternatively and preferably they may be generally flat, with the individual LEDs in each matrix oriented, i.e. inclined, so that their optical axes are directed to define the required conical light beam.

## Claims

1. A machine for inspecting the finish area of a glass container at an inspection station for anomalies comprising defects such as checks and blisters, comprising
means (16) operable to rotate a glass container (10) about its axis (A) at the inspection station, a light source (20,21) operable to illuminate the finish area of the glass container when rotating,
a camera (22) operable to image the illuminated finish area of the glass container,
said camera viewing the finish area at an angle to the glass container axis, wherein the relationship between the light source (20,21) and the camera (22) is such that a dark field will be imaged by the camera when the finish area is illuminated by the light source, the imaged dark field including light from a defect if present, and
a control (50) which is configured
to control the operation of said camera (22) to capture a first array of images of an anomaly (30) at a predetermined number of angular increments (θ) of rotation, the anomaly (30) comprising a check or a blister, whereby objects corresponding to reflections from the anomaly (30) captured at the predetermined number of angular increments (θ) will follow an elliptical path, and
**characterised in that** the control (50) is configured
to unwrap the first array of captured images to define a second array (A-K) in which the objects corresponding to reflections from the anomaly follow a straight path, and
to evaluate the objects in the second array on the basis of their locations relative to each other and to a straight datum, wherein object locations having relatively smaller differences to one another in their distance to the straight datum are indicative of a blister anomaly, and wherein object locations having relatively larger differences to one another in their distance to the straight datum are indicative of a check anomaly or an additional anomaly.

2. A machine according to claim 1, wherein
the light source (20, 21) is defined by a pair of sources of conical light having light axes which are horizontal and 90 degrees related, and
said camera (22) has an axis 45 degrees from the horizontal and bisecting said horizontal light axes.

3. A machine according to claim 1 or 2, wherein the image captured by the camera is defined by an X-Y array of pixels and wherein said control configuration for unwrapping the predetermined number of captured images comprises
means for locating the edge points of the finish area of the container,
means for fitting a curve to the located edge points,
means for determining the peak (65) of the fitted curve,
means for defining a peak tangent line (67), and
means for vertically shifting the pixels in each vertical column by the number of pixel difference between the fitted curve and the peak tangent line.

4. A machine according to claim 1, 2 or 3, wherein the control (50) is configured to control the operation of the light source (20, 21).

## Patentansprüche

1. Maschine zum Prüfen des Halsbereichs eines Glasbehälters auf Anomalien wie Fehler wie bspw. Risse und Bläschen in einer Prüfstation, die aufweist:
eine Einrichtung (16), die betrieblich in der Prüfstation einen Glasbehälter (10) um seine Achse (A) dreht;
eine Lichtquelle (20, 21), die betrieblich den Halsbereich des Glasbehälters beleuchtet, wenn er sich dreht,
eine Kamera (22), die betrieblich den beleuchteten Halsbereich des Glasbehälters abbildet,
wobei die Kamera den Halsbereich unter einem Winkel zur Achse des Glasbehälters sieht, die Zuordnung der Lichtquelle (20, 21) zur Kamera (22) derart ist, dass die Kamera ein Dunkelfeld abbildet, wenn die Lichtquelle den Halsbereich beleuchtet, und das abgebildete Dunkelfeld Licht von einem ggf. vorliegenden Fehler beinhaltet, und
eine Steuerung (50), die ausgeführt ist,
die Kamera (22) so zu steuern, dass sie eine erste Abfolge von Abbildern einer Anomalie (30) in einer vorbestimmten Anzahl von Winkelschritten (Θ) der Umdrehung auffängt, wobei die Anomalie (30) einen Riss oder ein Bläschen aufweist, wodurch Objekte, die Reflexionen von der Anomalie (30) in der vorbestimmten Anzahl von Winkelschritten (Θ) entsprechen, einem elliptischen Pfad folgen,
**dadurch gekennzeichnet, dass**
die Steuerung (50) ausgeführt ist,
die erste Abfolge aufgefangener Abbilder zu einer zweiten Abfolge (A-K) abzuwickeln, in der die von der Anomalie entsprechender Objekte ausgehenden Reflexionen einem gradlinigen Pfad folgen, und
die Objekte in der zweiten Abfolge auf Grund ihrer Orte relativ zueinander und zu einer Bezugsgerade auszuwerten, wobei Objektorte mit relativ kleineren Unterschieden untereinander in ihrem Abstand zur Bezugsgerade auf eine Bläschen-Anomalie hinweisen und Objekte mit relativ größeren Unterschieden untereinander in ihrem Abstand zur Bezugsgerade auf eine Riss-Anomalie oder auf eine zusätzliche Anomalie hinweisen.

2. Maschine nach Anspruch 1, bei der
die Lichtquelle (20, 21) von einem Paar Quellen konischen Lichts mit Lichtachsen gebildet werden, die horizontal und unter 90° zueinander verlaufen, und
die Kamera (22) eine Achse aufweist, die 45° zur Horizontalen verläuft und die die waagerechten Lichtachsen schneidet.

3. Maschine nach Anspruch 1 oder 2, bei der die von der Kamera aufgefangene Abfolge von einem XY-Feld von Bildpunkten definiert ist und die Ausführung der Steuerung zum Abwickeln der vorbestimmten Anzahl von aufgefangenen Bildern aufweist:
eine Eirichtung zur Ortsbestimmung der Kantenpunkte des Halsbereichs des Behälters,
eine Einrichtung zum Anpassen einer Kurve an die gefundenen Kantenpunkte,
eine Einrichtung zum Bestimmen des Maximums (65) der Anpasskurve,
eine Einrichtung zum Bestimmen einer Tangente (67) am Maximum, und
eine Einrichtung zum vertikalen Verschieben der Bildpunkte in jeder vertikalen Spalte um die Anzahl der Bildpunktdifferenz zwischen der Anpasskurve und der Tangente am Maximum.

4. Maschine nach Anspruch 1, 2 oder 3, deren Steuerung (50) ausgeführt ist, die Lichtquelle (20, 21) betrieblich zu steuern.

## Revendications

1. Machine pour inspecter la surface de finition d'un contenant en verre au niveau d'un poste d'inspection quant à des anomalies comprenant des défauts tels que des bulles et des fissures, comprenant :
des moyens (16) pouvant être utilisés pour faire tourner un contenant en verre (10) autour de son axe (A) au niveau du poste d'inspection,
une source de lumière (20, 21) pouvant être utilisée pour éclairer la surface de finition du contenant en verre lors de sa rotation,
une caméra (22) pouvant être utilisée pour former l'image de la surface de finition éclairée du contenant en verre,
ladite caméra visualisant la surface de finition selon un angle par rapport à l'axe du contenant en verre, dans laquelle la relation entre la source de lumière (20, 21) et la caméra (22) est telle que l'image d'un champ foncé sera formée par la caméra lorsque la surface de finition est éclairée par la source de lumière, le champ foncé dont l'image est formée comprenant une lumière provenant d'un défaut, si un tel défaut est présent, et
une commande (50) qui est configurée
pour commander le fonctionnement de ladite caméra (22) pour capturer un premier ensemble d'images d'une anomalie (30) à un nombre prédéterminé d'incréments angulaires (θ) de rotation, l'anomalie (30) comprenant une bulle ou une fissure, moyennant quoi des objets correspondant à des réflexions à partir de l'anomalie (30) capturée au nombre prédéterminé d'incréments angulaires (θ) suivra un trajet elliptique, et
**caractérisée en ce que** la commande (50) est configurée
pour dérouler le premier ensemble d'images capturées pour définir un deuxième ensemble (A-K) dans lequel les objets correspondant à des réflexions à partir de l'anomalie suivent un trajet droit, et
pour évaluer les objets dans le deuxième ensemble sur la base de leurs emplacements les uns par rapport aux autres et par rapport à une référence droite, dans laquelle les emplacements d'objet ayant des différences relativement plus petites les uns par rapport aux autres de leur distance jusqu'à la référence droite sont indicatifs d'une anomalie de fissure, et dans laquelle les emplacements d'objet ayant des différences relativement plus grandes les uns par rapport aux autres de leur distance jusqu'à la référence droite sont indicatifs d'une anomalie de bulle ou d'une autre anomalie.

2. Machine selon la revendication 1, dans laquelle
la source de lumière (20, 21) est définie par une paire de sources de lumière conique ayant des axes de lumière qui sont horizontaux et dans une relation de 90 degrés, et
ladite caméra (22) a un axe à 45 degrés par rapport à l'horizontale et à une même distance angulaire desdits axes de lumière horizontaux.

3. Machine selon la revendication 1 ou 2, dans laquelle l'image capturée par la caméra est définie par un ensemble X-Y de pixels, et dans laquelle ladite configuration de commande pour dérouler le nombre prédéterminé d'images capturées comprend :
des moyens pour localiser les points de bord de la surface de finition du contenant,
des moyens pour ajuster une courbe aux points de bord localisés,
des moyens pour déterminer le sommet (65) de la courbe ajustée,
des moyens pour définir une tangente au sommet (67), et
des moyens pour décaler verticalement les pixels dans chaque colonne verticale du nombre de pixels de différence entre la courbe ajustée et la tangente au sommet.

4. Machine selon la revendication 1, 2 ou 3, dans laquelle la commande (50) est configurée pour commander le fonctionnement de la source de lumière (20, 21).
